**Europäisches Patentamt**

**European Patent Office**

**Office européen des brevets**

(11) Veröffentlichungsnummer: **0 292 650 B1**

# EUROPÄISCHE PATENTSCHRIFT

(45) Veröffentlichungstag der Patentschrift: **26.08.92**

(51) Int. Cl.⁵: **A01C 17/00**

(21) Anmeldenummer: **88102995.3**

(22) Anmeldetag: **29.02.88**

(54) **Schleuderdüngerstreuer.**

(30) Priorität: **29.05.87 DE 3718145**
**05.09.87 DE 3729871**

(43) Veröffentlichungstag der Anmeldung:
**30.11.88 Patentblatt 88/48**

(45) Bekanntmachung des Hinweises auf die
Patenterteilung:
**26.08.92 Patentblatt 92/35**

(84) Benannte Vertragsstaaten:
**BE DE FR GB IT NL**

(56) Entgegenhaltungen:
**EP-A- 0 017 128**
**FR-A- 2 450 551**

(73) Patentinhaber: **Amazonen-Werke H. Dreyer GmbH & Co. KG**
**Am Amazonenwerk 9-13**
**W-4507 Hasbergen-Gaste(DE)**

(72) Erfinder: **Dreyer, Heinz, Dipl.-Ing. Univ. Dr. agr.**
**Am Amazonenwerk 7**
**W-4507 Hasbergen(DE)**

(74) Vertreter: **Patentanwälte Grünecker, Kinkeldey, Stockmair & Partner**
**Maximilianstrasse 58**
**W-8000 München 22(DE)**

## Beschreibung

Die Erfindung betrifft ein Verfahren zum Einsatz von Schleuderdüngerstreuern gemäß dem Oberbegriff der Patentansprüche 1, 4 und 5.

Aus der europäischen Patentanmeldung EP-A 017 128 ist ein Verfahren zum Einsatz von Schleuderdüngerstreuern bekannt. Der dort offenbarte Schleuderdüngerstreuer weist zwei unterhalb seines Vorratsbehälters quer zur Fahrtrichtung gesehen nebeneinander angeordnete Schleuderscheiben auf, die jeweils leicht lösbar auf den Ausgangswellen eines Winkelgetriebes angeordnet sind. Es ist dieser Druckschrift nicht zu entnehmen, daß diese Schleuderscheiben gegen andere Schleuderscheiben mit anderen Wurfelementen ausgetauscht werden sollen. Auf den Schleuderscheiben sind jeweils zwei Wurfschaufeln unterschiedlicher Länge befestigt, deren jeweilige Abstreukante einen unterschiedlichen Abstand zur Rotationsachse der Schleuderscheibe aufweisen soll. Jede Wurfschaufel besteht hier aus einem inneren Teil gleicher Länge, an dem unterschiedlich lange, in lotrechter Ebene verschwenkbare äußere Teile angeordnet sind, so daß der in lotrechter Ebene gemessene Abwurfwinkel für die jeweiligen äußeren Teile in unterschiedlichen Größen eingestellt werden kann. Zur Veränderung des Abstandes der Abstreukante der jeweiligen Wurfschaufel von der Rotationsachse der Schleuderscheibe weist diese zur Befestigung des jeweiligen inneren Teiles einer Wurfschaufel ein radial angeordnetes Langloch auf. Der horizontale Anstellwinkel zwischen der Wurfschaufel und der an der Stelle ihrer Abstreukante an ihrer Umlaufbahn in Drehrichtung angelegten Tangente läßt sich mittels sich in jedem inneren Teil einer Wurfschaufel befindlichen, bogenförmig ausgebildeten Langloches verändern, wobei sich auch gleichzeitig der Abstand der Abstreukante zur Drehachse ändert.

Dadurch, daß sich der Abstand der Abstreukante der Wurfschaufel von der Rotationsachse der Schleuderscheibe und der horizontale Anschlagwinkel der Schaufeln verändern läßt, soll eine für jeden Einsatzfall gleichmäßige Verteilung der Düngemittel und anderer Stoffe auf den Boden zu erreichen sowie ein optimales Streubild zu erzeugen sein.

In der Praxis hat sich nun gezeigt, daß diese Einstellung nicht in allen Fällen ausreichend ist, vor allem, wenn mit ein und demselben Schleuderdüngerstreuer Düngemittel über Arbeitsbreiten von 6 bis zu 24 m und mehr verteilt werden sollen. Hierbei hat sich nun herausgestellt, daß es unumgänglich ist, mehrere Schleuderscheiben mit unterschiedlich langen Wurfschaufeln bzw. mit unterschiedlich großen Abständen der Abstreukanten der Wurfschaufel zur Drehachse einzusetzen. Bei einem Schleuderdüngerstreuer, der in der Praxis bekanntgeworden ist, sind für verschiedene Arbeitsbreiten bzw. verschiedene Düngemittelsorten entsprechend ausgebildete Streuscheiben mit entsprechend unterschiedlichen Wurfschaufeln einzusetzen. Inzwischen ist jedoch dieses System derart unübersichtlich geworden, da die Anzahl der verschiedenen Streuscheiben mit unterschiedlichen Wurfschaufeln fast unüberschaubarer groß geworden ist, so daß es in der Praxis immer wieder zu Verwechslungen kommt.

Aus der europäischen Patentanmeldung EP-A 0 242 749, die einen Stand der Technik nach Artikel 54(3) darstellt, ist ein Verfahren zum Einsatz eines solchen Schleuderdüngerstreuers bekannt. Die französische Patentanmeldung FR-A 24 50 551 offenbart ebenfalls einen solchen Schleuderdüngerstreuer.

Im Hinblick auf diesen Stand der Technik liegt der Erfindung die Aufgabe zugrunde, ein Verfahren zum Einsatz von Schleuderdüngerstreuern zu schaffen, bei dem die für die Landwirtschaft erforderlichen Streubreiten von beispielsweise 9 bis 24 m und mehr mit geringem Aufwand, einfacher Handhabung und unter Verwendung von einfachen Vorrichtungen abgedeckt werden kann.

Diese Aufgabe wird erfindungsgemäß durch ein Verfahren zum Einsatz von Schleuderdüngerstreuern mit den kennzeichnenden Merkmalen der Patentansprüche 1, 4 und 5 gelöst.

Bevorzugte Ausführungsbeispiele sind in den Unteransprüchen offenbart.

Infolge dieser Maßnahmen ist es überraschenderweise vollkommen ausreichend für einen Schleuderdüngerstreuer, zumindest zwei, vorzugsweise drei verschiedene Schleuderscheibenpaare bzw. Schleuderscheibentypen oder -sorten vorzusehen, wobei das eine Schleuderscheibenpaar für die größeren Arbeitsbreiten von beispielsweise 15 bis 24 m, das andere Schleuderscheibenpaar für die Arbeitsbreiten von 9 bis 15 m und die dritte Schleuderscheibe für das Grenzstreuen vorzusehen ist. In überraschender Weise hat sich gezeigt, daß diese Schleuderscheiben nun vollkommen ausreichend sind, wobei es lediglich erforderlich ist, daß die Wurfschaufeln winkelverstellbar auf den Schleuderscheiben anzuordnen sind, so daß für die entsprechende Arbeitsbreite bzw. die entsprechende Düngersorte der Winkel der Wurfschaufel eingestellt werden muß.

Hierbei kann die durch die unterschiedliche Länge der Wurfschaufeln auf einer Schleuderscheibe erzielte Wirkung auch durch eine unterschiedliche Winkeleinstellung gleichlanger Wurfschaufeln erzielt werden.

Da der Unterschied zwischen den Abständen von Abstreukante zur Drehachse der Streuschaufeln der beiden Streuscheiben für die größere und die kleinere Streubreite zumindest etwa 3 bis 10 cm beträgt, ist es für den Landwirt, der den Schleuderdüngerstreuer einsetzt, leicht zu erkennen, welche Schleuderscheiben er für die größeren Arbeitsbreiten und welche Schleuderscheiben er für die kleineren Arbeitsbreiten einsetzen muß. Verwechselungen, wie sie früher durchaus in der Praxis vorkommen konnten, wenn der Landwirt nicht genau darauf achtete, welche Schleuderscheibe er jeweils einsetzen mußte, sind somit in äußerst einfacher Weise ausgeschlossen.

Das Einstellen der Wurfschaufeln für die jeweilige Arbeitsbreite bzw. entsprechend der jeweiligen Düngersorte ist erfindungsgemäß vorgesehen, daß auf der jeweiligen Schleuderscheibe Markierungen, wie Kerben etc. angebracht sind, anhand derer die jeweiligen Winkelstellungen der Wurfschaufeln einstellbar sind.

In einer anderen erfindungsgemäßen Lösung ist vorgesehen, daß bei dem gattungsgemäßen Schleuderstreuer die Maßnahmen entsprechend des Patentanspruches 4 verwirklicht werden, wodurch ebenfalls eine Lösung der gestellten Aufgabe erreicht wird. Im Gegensatz zu der ersten Lösung werden hier nicht die Schleuderscheiben mit den Wurfschaufeln ausgetauscht, sondern nur die Wurfschaufeln, die auf den Schleuderscheiben angebracht sind, werden gegen andere Wurfschaufeln ausgetauscht. Hierbei sind die Wurfschaufeln in bevorzugter Weise mittels einer leicht lösbaren Befestigung auf den Schleuderscheiben angebracht.

In einer weiteren Lösung werden erfindungsgemäß die Maßnahmen des Kennzeichens des Patentanspruches 5 vorgeschlagen. Hierdurch wird unabhängig von den Wurfschaufellängen bzw. dem Abstand der Streukanten zur Rotationsachse und unabhängig von der Drehzahl der Schleuderscheiben dem Fachmann angegeben, welche Umfangsgeschwindigkeiten eingehalten werden müssen, um die erfindungsgemäßen Vorteile zu erreichen.

Durch die erfindungsgemäß vorgeschlagenen Maßnahmen werden viele Vorteile erreicht. Durch das Verschwenken der Wurfschaufeln und das Einstellen der Wurfschaufeln in verschiedenen Winkelstellungen wird ein universeller Einsatz des Schleuderdüngerstreuers für alle handelsüblichen Düngersorten, üblichen Arbeitsbreiten und Einsatzverhältnisse in äußerst einfacher Weise erreicht.

Es wird also erfindungsgemäß nur noch zwischen drei Typen von Schleuderscheiben bzw. Wurfschaufeln unterschieden. Die Erfindung berücksichtigt hierbei, daß die einen Schleuderscheiben für "geringere" Arbeitsbreiten von 9 bis 15 m, die anderen Schleuderscheiben für "größere" Arbeitsbreiten von 15 bis 24 m und die Schleuderscheiben für das "Grenzstreuen" einsetzbar sind. Beim "Grenzstreuen" muß zu der dem Feldrand zugewandten Seite des Streuers der Dünger bis an den Feldrand und praktisch nicht über den Feldrand hinaus in der erforderlichen Streustärke geworfen werden, weil auf der dem Feldrand zugewandten Seite keine Überlappung des Streubildes erfolgt. Hierbei sind die Wurfschaufeln für das "Grenzstreuen" in erfindungsgemäßer Weise teleskopartig längenveränderbar ausgebildet, so daß im Gegensatz zu den in der Praxis verwendeten Grenzstreuscheiben nicht für jeden unterschiedlichen Abstand zur Feldrandgrenze eine andere Schleuderscheibe mit anders ausgebildeten Wurfschaufeln eingesetzt werden muß, sondern man jetzt in erfindungsgemäßer Weise mit einer einzigen Scheibe, deren Wurfschaufeln teleskopartig längenveränderbar und zusätzlich winkelverschwenkbar auf der Schleuderscheibe angeordnet sind, um so den gesamten Arbeitsbereich des "Grenzstreuens" abzudecken, auskommt. Hierdurch kann der Düngerstreuer in einfachster Weise auf verschiedene Arbeitsbreiten, die beispielsweise einem Mehrfachen der Drillmaschinenarbeitsbreite entsprechen, zum Streuen zum Feldrand hin eingestellt werden. Wenn die Drillmaschine beispielsweise eine Arbeitsbreite von 3 m aufweist, und di Arbeitsbreite des Düngerstreuers beträgt beispielsweise 12 m, liegt die erste Fahrgasse beispielsweise im halben Abstand der Streubreite des Düngerstreuers, also 6 m vom Feldrand entfernt. Mit Hilfe dieser Schleuderscheiben zum "Grenzstreuen" läßt sich mit nur einem "Grenzstreuscheibentyp" eine Anpassung an alle o Fahrgassensysteme vornehmen, wobei das Streubild zum Feldrand steil abfällt. Bei den gebräuchlichen Arbeitsbreiten von 9 bis 24 m eines Zentrifugaldüngerstreuers ersetzt die in erfindungsgemäßer Weise ausgebildete Schleuderscheibe zum "Grenzstreuen" fünf und mehr Grenzstreuscheibentypen, die bisher in der Praxis üblich sind.

Weitere Einzelheiten der Erfindung sind der Beispielsbeschreibung und den Zeichnungen zu entnehmen. Hierbei zeigen

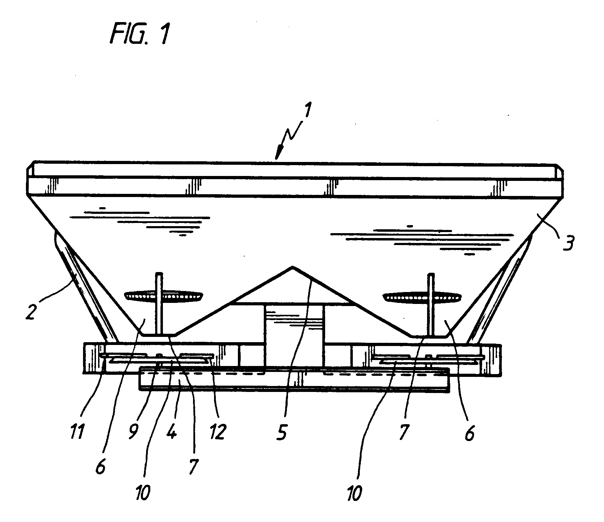

Fig. 1 den in erfindungsgemäßer Weise ausgebildeten Schleuderdüngerstreuer in der Ansicht von hinten in Prinzipdarstellung,

Fig. 2 das Schleuderscheibenpaar für die "größeren" Arbeitsbreiten in der Draufsicht,

Fig. 3 das Schleuderscheibenpaar für die "kleineren" Streubreiten in der Daufsicht,

Fig. 4 die erfindungsgemäße linke Grenzstreuscheibe und

Fig. 5 die erfindungsgemäße rechte Grenzstreuscheibe.

Der Schleuderdüngerstreuer 1 ist mit dem Rahmen 2 ausgestattet, an dem der Vorratsbehälter 3 und ein Winkelgetriebe 4 angebracht sind.

Hierbei ist der untere Bereich des Vorratsbehälters 3 durch ein dachförmiges Mittelteil 5 in zwei Auslauftrichter 6 unterteilt, in deren Bodenplatten 7 sich nicht näher dargestellte, bekannte Auslauföffnungen befinden. Diese Auslauföffnungen sind mit Hilfe von schieberförmigen Dosierelementen für sich verschließbar und in unterschiedlichen Öffnungsweiten einstellbar.

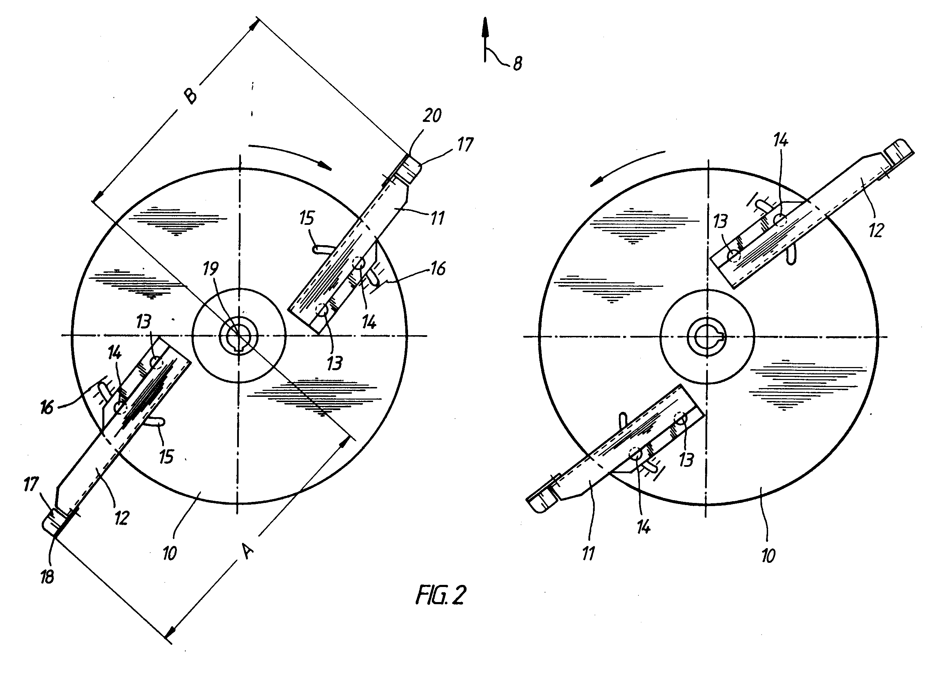

Unterhalb der Auslauföffnungen sind quer zur 8 auf den Ausgangswellen 9 des Winkelgetriebes 4 beiden die Schleuderscheiben 10 nebeneinander angeordnet. Auf diesen Schleuderscheiben 10 sind jeweils die kürzere Wurfschaufel 11 und die längere Wurfschaufel 12 befestigt. Die Befestigung der Schleuderscheiben 10 auf den Ausgangswellen 9 des Winkelgetriebes 4 ist derart ausgebildet, daß sich die Schleuderscheiben 10 vorzugsweise werkzeuglos auf diesen Ausgangswellen 9 montieren bzw. von den Ausgangswellen demontieren lassen. Den einzelnen Schleuderscheiben 10 wird das sich im Vorratsbehälter 3 des Schleuderdüngerstreuers befindliche Düngemittel in genau einstellbaren Mengen zugeführt. Die rotierenden Schleuderscheiben 10 verteilen mit den Wurfschaufeln 11 und 12 den auf die jeweilige Schleuderscheibe 10 auftreffenden Düngemittelstrom gleichmäßig über die genau einstellbare Arbeitsbreite des Düngerstreuers 1. Die Schleuderscheiben 10 rotieren entgegengesetzt, wie dies durch die Pfeile in Fig. 2 angedeutet ist.

Die Schleuderscheiben 10 gemäß Fig. 2 sind für das Verteilen der Düngemittel über die größeren Arbeitsbreiten von 15 bis 24 m vorgesehen. Auf den Schleuderscheiben 10 sind jeweils spiegelbildlich zueinander die kürzere Wurfschaufel 11 und die längere Wurfschaufel 12 angeordnet. Die Wurfschaufeln 11 und 12 sind jeweils mit den Schraubbolzen 13 und 14 auf der Schleuderscheibe angeordnet. Der Schraubbolzen 13 ist jeweils in einer Bohrung, die sich in der Schleuderscheibe 10 befindet, angeordnet, während der Schraubbolzen 40 sich in einem kreisförmigen Langloch 15, welches in der Schleuderscheibe 10 befindet, angebracht ist. Hierdurch sind die Wurfschaufeln 11 und 12 um den Schraubbolzen 13 winkelverschwenkbar und in unterschiedlichen Winkelstellungen auf der Schleuderscheibe 10 anzuordnen. Zur Winkeleinstellung sind auf der Schleuderscheibe 10 als Kerben 16 ausgebildete Markierungen angeordnet. Die Wurfschaufeln 11 und 12 weisen an ihrem äußeren Ende in aufrechter Ebene verschwenkbare Streuflügel auf, wobei durch das Verstellen dieser Flügel 17 der Abwurfwinkel der Düngemittelpartikel in aufrechter Ebene veränderbar ist. Die Abstreukanten 18 der längeren Wurfschaufel 12 weisen zu der Drehachse 19 einen Abstand A von zumindest 35 bis zum 50 cm, vorzugsweise 40 cm auf. Die Abstreukante 20 der kürzeren Wurfschaufeln 11 für das Streuen über "größere" Streubreiten weist. Einen Abstand B von zumindest 25 bis 35 cm vorzugsweise etwa 30 cm zur Drehachse 19 auf.

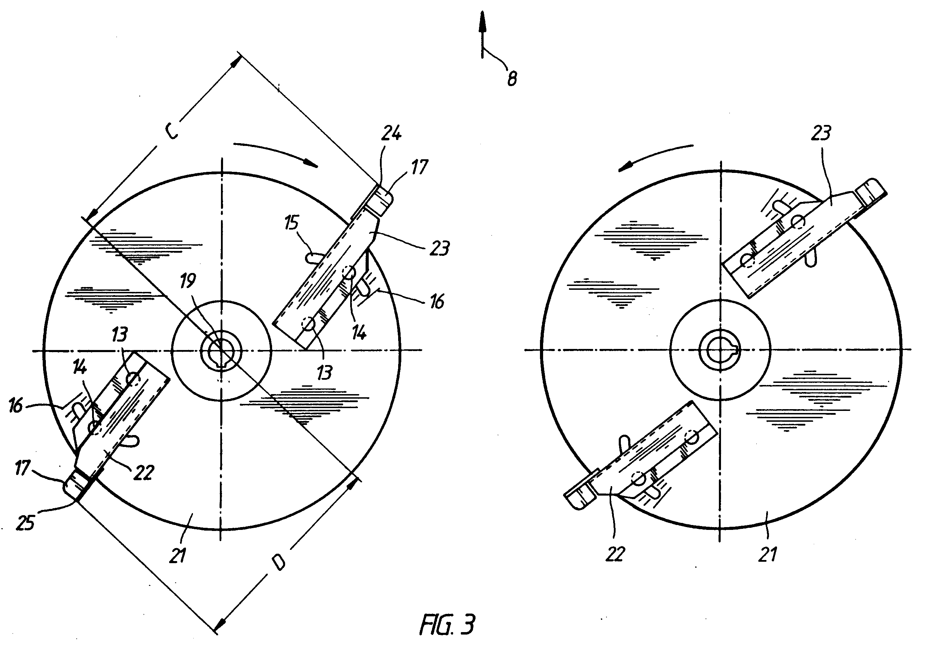

Für das Streuen der Düngemittelpartikel über kleinere Arbeitsbreiten von 6 bis 15 m werden die Schleuderscheiben 10 gemäß Fig. 2 gegen die Schleuderscheiben 21 gemäß Fig. 3 ausgetauscht. Auf diesen Schleuderscheiben 21 sind die kürzere Wurfschaufel 22 und die längere Wurfschaufel 23 angeordnet. Die Wurfschaufeln 22 und 23 sind mittels der Schraubbolzen 13 und 14 auf der Schleuderscheibe 21 befestigt. Der Schraubbolzen 14 ist in dem Langloch 15, welches in der Schleuderscheibe 21 angeordnet ist, um den Schraubbolzen 13 winkelverschwenkbar und in unterschiedlichen Stellungen mittels des Schraubbolzens 14 einzustellen und festzuklemmen Über die Markierungen, die als Kerben 16 ausgebildet sind, können die Wurfschaufeln 22 und 23 genau entsprechend der Angaben des Herstellers eingestellt werden.

Die Abstreukante 24 der längeren Wurfschaufel 23 weist zu der Drehachse 19 der Schleuderscheibe 21 einen Abstand C von 25 bis 35 cm, vorzugsweise von 28 cm auf.

Die Abstreukante 25 der kürzeren Wurfschaufel 23 für kleinere Streubreiten weist einen Abstand D von 18 bis 28 cm, vorzugsweise von 23 cm zur Drehachse 19 auf.

Es sei an dieser Stelle darauf hingewiesen, daß mit in Erfindung eingeschlossen ist, daß anstelle des Austausches der Schleuderscheiben 10 mit den Wurfschaufeln 11 und 12 gegen die Schleuderscheiben 21 mit den Wurfschaufeln 22 und 23 auch eingeschlossen sein soll, lediglich die Wurfschaufeln 11 und 12 für "größere" Streubreiten gegen die Wurfschaufeln 22 und 23 für "geringere" Streubreiten auszutauschen. Hierzu ist es dann lediglich erforderlich, die Schraubbolzen 13 und 14 zu lösen, so daß die Wurfschaufeln von den Schleuderscheiben freikommen.

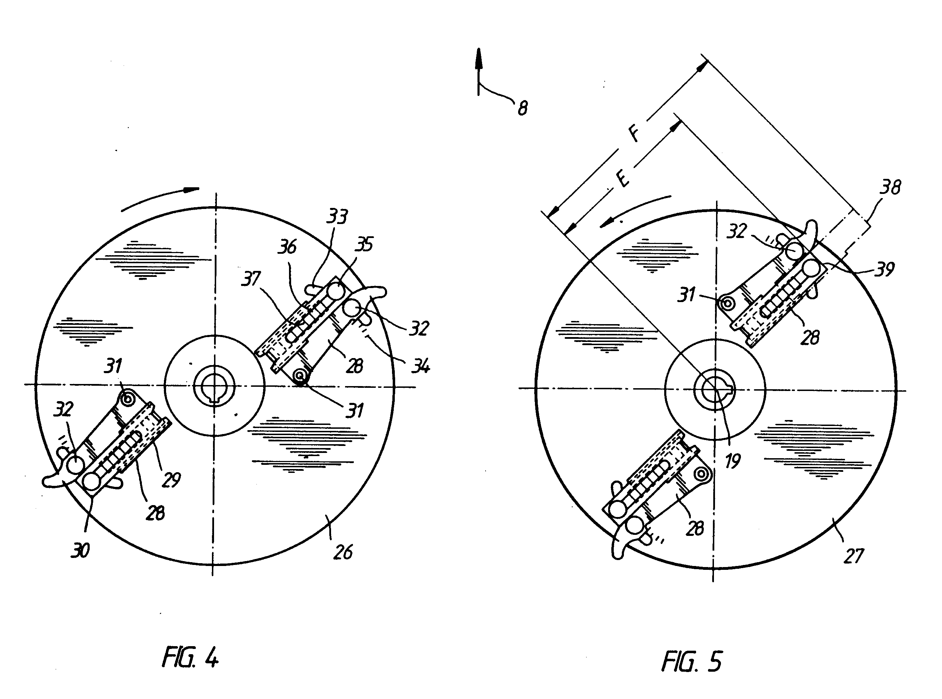

Zur Durchführung des "Grenzstreuens", je nach dem auf welcher Seite des Schleuderdüngerstreuers die Feldrandgrenze liegt, ist eine der in den Fig. 4 und 5 dargestellte Grenzstreuscheibe einzusetzen. Wenn die Feldrandgrenze auf der linken Seite des Schleuderdüngerstreuers liegt, ist die linke Schleuderscheibe gemäß Fig. 2 oder 3 gegen die Schleuderscheibe 26 für das "Grenzstreuen" gemäß Fig. 4 auszutauschen. Liegt die Feldrandgrenze auf der rechten Seite des Schleuderdüngerstreuers, so ist die rechte Schleuderscheibe gemäß Fig. 2 bzw. 3 gegen die Schleuderscheibe 27 für das "Grenzstreuen" gemäß Fig. 5 auszutauschen. Auf den Grenzstreuscheiben 26 bzw. 27 sind die teleskopartig längenveränderbaren Wurfschaufeln 28 angeordnet. Die Wurfschaufeln 28 bestehen aus dem inneren Teil 29 und dem äußeren Teil 30. Das innere Teil 29 ist mittels der Schraubbolzen 31 und 32 auf der Grenzstreuscheibe 26 angeordnet. Der Schraubbolzen 32 ist in dem kreisförmigen Langloch 33, welches sich in der Schleuderscheibe 26 befindet, angeordnet. Hierdurch ist die Schaufel 28 um den Schraubbolzen 31 winkelverschwenkbar auf der Schleuderscheibe 26 angeordnet und in verschiedenen Positionen mittels des Schraubbolzens 32 festzuklemmen. Das Einstellen der Wurfschaufel 28 wird durch die als Kerbe 34 ausgebildete Markierung erleichtert. Die jeweilige einstellung wird vom Hersteller angegeben. Der äußere Teil 30 der Grenzstreuschaufel 28 ist mittels des Schraubbolzens 35 an dem inneren Teil 29 der Grenzstreuschaufel 28 befestigt. Damit das äußere Teil 30 der Grenzstreuschaufel 28 gegenüber dem inneren Teil 29 der Grenzstreuschaufel teleskopartig längenveränderbar und in unterschiedlichen Positionen festsetzbar ist, weist weist das äußere Teil 30 das Langloch 36 auf, in dem der Schraubbolzen 35, der an dem inneren Teil 29 der Grenzstreuschaufel 28 befestigt ist, geführt ist. Ebenfalls sind an der Grenzstreuschaufel 28 zwischen dem inneren Teil 29 und dem äußeren Teil 30 als Kerben ausgebildete Markierungen 37 vorgesehen, um so die Länge der Wurfschaufeln 28 in einfacher Weise entsprechend der Herstellerangaben einstellen zu können. Die Grenzstreuschaufel 28 wird für "geringere" Grenzstreuabstände in die mit durchzogenen Linien dargestellte Stellung gebracht, während sie für "größere" Arbeitsbreiten in die mit strichpunktierte Linien angedeutete Stellung 38 zu bringen und zu befestigen ist. Die Wurfschaufeln 28 sind in unterschiedlichen Längen einzustellen, so daß die Abstreukante 39 der Wurfschaufel 28 für geringere Grenzstreuabstände einen Abstand von zumindestens 10 cm, vorzugsweise 13 cm und für das Bestreuen von größeren Grenzstreuabständen einen Abstand F von bis zu 32 cm, vorzugsweise 28 cm aufweist.

Der Unterschied zwischen den Abständen A und B sowie C und D der Abstreukanten der Streuschaufeln der beiden Streuscheiben 10 und 21 für die "größere" und die "kleinere" Streubreite zur Drehachse muß zumindestens 3 bis 10 cm betragen.

Des weiteren müssen die Wurfschaufeln 22,23 für die "kleineren" Streubreiten sowie die Wurfschaufeln 11, 12 für die "größeren" Streubreiten so ausgebildet sein, daß die Abstreukante der Wurfschaufeln für die größeren Streubreiten um zumindest 5 cm und/oder 1/4 des Abstreukantenabstandes weiter von der Drehachse 19 entfernt sind als die Abstreukanten der Wurfschaufeln 22, 23 für die "kleineren" Streubreiten, während die Streukanten der Wurfschaufeln für die kleineren Streubreiten um zumindest 5 cm und/oder 1/4 des Abstreukantenabstandes weiter von der Drehachse 19 als die Abstreukanten der Wurfschaufeln 28 für das "Grenzstreuen" entfernt sein müssen.

Um die erfindungsgemäßen Wirkungen zu erzielen, weisen die Wurfschaufeln 11,12 für das Streuen über die "größeren" Streubreiten von 15 bis 24 m an ihren Abstreukanten 18,20 eine Umfangsgeschwindigkeit von etwa 18 bis 37 m/sec, vorzugsweise ca. 23 m/sec für die kürzere Wurfschaufel 11 und ca. 30 m/sec für die längere Wurfschaufel 12 auf. Die Umfangsgeschwindigkeiten an den Abstreukanten 24,25 der Wurfschaufeln 22,23 für "kleinere" Streubreiten von 6 bis 15 betragen etwa 13 bis 26 m/sec, vorzugsweise ca. 17 m/sec für die kürzere Wurfschaufel 22 und ca. 21 m/sec für die längere Wurfschaufel 23. Die Umfangsgeschwindigkeit an den Abstreukanten 39 der Wurfschaufeln 28 für das Grenzstreuen betragen zwischen etwa 8 m/sec, vorzugsweise ca. 10 m/sec für kleinere Grenzstreuabstände von 5 und 6 m und 26 m/sec, vorzugsweise 21 m/sec für größere Grenzstreuabstände von 10 bis 12 m.

**Patentansprüche**

1. Verfahren zum Einsatz von Schleuderdüngerstreuern zum Verteilen von Düngemitteln und dgl. mit einem Vorratsbehälter, der Dosierelemente für zumindest zwei quer zur Fahrtrichtung nebeneinander angeordneten Schleuderscheiben aufweist, wobei jede Schleuderscheibe lösbar auf ihrer jeweiligen Antriebswelle angeordnet ist und jeweils kürzere und längere und/oder vorzugsweise mit verschiedenen Winkeln zur Radialen angestellte, Wurfschaufeln aufweist, welche derart einstellbar und verschwenkbar auf der Schleuderscheibe angeordnet sind, daß der horizontale Anstellwinkel zwischen der Wurfschaufel und der an der Stelle der Abstreukante an ihrer Umlaufbahn in Drehrichtung angelegten Tangente veränderbar ist und wobei unterschiedliche Anstellwinkel der Wurfschaufeln in aufrechter Ebene vorgesehen sind, daß die Schleuderscheiben (10) mit den Wurfschaufeln (11, 12) gegen weitere Schleuderscheiben (21, 26, 27) mit anders ausgebildeten und/oder kürzeren und/oder längeren Wurfschaufeln (22, 23, 28) austauschbar sind, **dadurch gekennzeichnet,** daß für die Einsätze des Schleuderdüngerstreuers mehrere Sätze unterschiedlicher Schleuderscheibenpaare vorgesehen sind, wobei jeweils ein Schleuderscheibenpaar zum Einsatz kommt und zwar derart, daß zumindest zwei verschiedene Schleuderscheibenpaare und/oder Schleuderscheiben mit unterschiedlich langen und/oder kurzen und/oder vorzugsweise mit verschiedenen Winkeln zur Radialen angestellte, Wurfschaufeln (11, 12, 22, 23, 28) zum Austausch gegeneinander vorgesehen sind, daß für größere Streubreiten, Schleuderscheibenpaare (10) mit langen, jedoch unterschiedlich langen zur Radialen der Schleuderscheibe winkelverstellbaren und/oder vorzugsweise mit verschiedenen Winkeln zur Radialen angestellte, Wurfschaufeln (11, 12) verwendet werden, deren Abstreukanten zur Drehachse (19) jeweils einen Abstand (A) von zumindest 35 bis 50 cm, vorzugsweise 40 cm, für die längere (12) und einen Abstand (B) von zumindest 25 bis 35 cm, vorzugsweise 30 cm, für die kürzeren Wurfschaufeln (11) aufweisen, daß für kleinere Streubreiten, Schleuderscheibenpaare (21) mit kürzeren, jedoch unterschiedlich langen, zur Radialen der Schleuderscheibe winkelverstellbare und/oder vorzugsweise mit verschiedenen Winkeln zur Radialen angestellte, Wurfschaufeln (22, 23) verwendet werden, deren Abstreukanten (24) zur Drehachse (19) jeweils einen Abstand (C) von zumindest 25 bis 35 cm, vorzugsweise 28 cm, für die längere (23) und einen Abstand (D) von zumindest 18 bis 28 cm, vorzugsweise 23 cm, für die kürzere Wurfschaufel (22) aufweisen, und daß für das Grenzstreuen mit einseitig steil abfallenden Streustärkenendbereichen zumindest eine der Schleuderscheiben (26, 27) gegen eine Grenzstreuscheibe ausgetauscht wird, welche zumindest zwei längenverstellbare und zur Radialen der Grenzstreuscheibe winkelverstellbare Wurfschaufeln (28) aufweist, wobei die Wurfschaufeln (28) jeweils aus teleskopartig zueinander verschiebbaren Teilen (29, 30) bestehen, deren Abstreukanten (38) einen kleineren Abstand (E, F) zur Drehachse (19) als die Abstreukante (18, 24) der Wurfschaufeln (11, 12, 22, 23) der Schleuderscheiben (10, 21) für normale Streubreiten beispielsweise von 15 bis 24 m oder beispielsweise von 9 bis 15 m, und zwar vorzugsweise einen Abstand der Abstreukante (39) zur Drehachse (19) von 10 bis 32 cm, aufweisen.

2. Verfahren nach Anspruch 1, **dadurch gekennzeichnet,** daß der Unterschied zwischen den Abständen (A, B, C, D) von Abstreukante (18, 39) zur Drehachse (19) der Wurfschaufeln (11, 12, 22, 23) der beiden Schleuderscheiben (10, 21) für die größeren Streubreiten und die kleinere Streubreite zumindest etwa 3 bis 10 cm beträgt.

3. Verfahren nach Anspruch 1, **dadurch gekennzeichnet,** daß auf der jeweiligen Schleuderscheibe (10, 21, 26, 27) Markierungen, wie Kerben (16, 34) etc. angebracht sind, anhand derer die jeweiligen Winkelstellungen der Wurfschaufeln (11, 12, 22, 23) einstellbar sind.

4. Verfahren zum Einsatz von Schleuderdüngerstreuern zum Verteilen von Düngemitteln und dgl. mit einem Vorratsbehälter, der Dosierelemente für zumindest zwei quer zur Fahrtrichtung nebeneinander angeordneten Schleuderscheiben aufweist, wobei jede Schleuderscheibe, vorzugsweise lösbar, auf ihrer jeweiligen Antriebswelle angeordnet ist und jeweils, vorzugsweise kürzere und längere bzw. mit verschiedenen Winkeln zur Radialen angestellte, Wurfschaufeln aufweist, welche derart einstellbar und verschwenkbar auf der Schleuderscheibe angeordnet sind, daß der horizontale Anstellwinkel zwischen der Wurfschaufel und der an der Stelle der Abstreukante an ihrer Umlaufbahn in Drehrichtung angelegten Tangente veränderbar ist, und wobei vorzugsweise unterschiedliche Anstellwinkel der Wurfschaufeln in aufrechter Ebene vorgesehen sind, **dadurch gekennzeichnet,** daß für die Einsätze des Schleuderdüngerstreuers mehrere Sätze unterschiedlicher Wurfschaufelsätze vorgesehen sind, wobei jeweils nur ein Wurfschaufelsatz zum Einsatz kommt und zwar derart, daß die Wurfschaufeln (11, 12, 22, 23, 28) gegen anders ausgebildete und/oder kürzere und/oder längere und/oder mit verschiedenen Winkeln zur Radialen angestellte Wurfschaufeln austauschbar auf den Schleuderscheiben angeordnet sind, daß für größere Streubreiten, zur Radialen der Schleuderscheibe winkelverstellbare Wurfschaufeln (11, 12) größerer Länge, jedoch vorzugsweise unterschiedlicher Länge bzw. mit verschiedenen Winkeln zur Radialen angestellt, verwendet werden, während für kleinere Streubreiten, zur Radialen der Schleuderscheibe winkelverstellbare Wurfschaufeln (22, 23) kürzerer, jedoch vorzugsweise unterschiedlicher, Länge verwendet werden, daß für das Grenzstreuen kurze zur Radialen der Schleuderscheibe winkelverstellbare Wurfschaufeln (28) verwendet werden, daß die Abstreukanten (18) der Wurfschaufeln für die größeren Streubreiten, um 5 cm weiter von der Drehachse (19) entfernt sind als die Abstreukanten (24) der Wurfschaufeln (22, 23) für die kleineren Streubreiten, während die Abstreukanten (24) der Wurfschaufeln (22, 23) für die kleineren Streubreiten, 5 cm weiter von der Drehachse (19) als die Abstreukanten (39) der Wurfschaufeln (28) für das Grenzstreuen entfernt sind.

5. Verfahren zum Einsatz von Schleuderdüngerstreuern zum Verteilen von Düngemitteln und dgl. mit einem Vorratsbehälter, der Dosierelemente für zumindest zwei quer zur Fahrtrichtung nebeneinander angeordneten Schleuderscheiben aufweist, wobei jede Schleuderscheibe, vorzugsweise lösbar, auf ihrer jeweiligen Antriebswelle angeordnet ist und jeweils, vorzugsweise kürzere und längere bzw. mit verschiedenen Winkeln zur Radialen angestellte, Wurfschaufeln aufweist, welche derart einstellbar und verschwenkbar auf der Schleuderscheibe angeordnet sind, daß der horizontale Anstellwinkel zwischen der Wurfschaufel und der an der Stelle der Abstreukante an ihrer Umlaufbahn in Drehrichtung angelegten Tangente veränderbar ist und wobei vorzugsweise unterschiedliche Anstellwinkel der Wurfschaufeln in aufrechter Ebene vorgesehen sind, **dadurch gekennzeichnet,** daß für die Einsätze des Schleuderdüngerstreuers mehrere Wurfschaufelsätze unterschiedlicher Art vorgesehen sind, wobei jeweils ein Wurfschaufelsatz zum Einsatz kommt und zwar derart, daß die Wurfschaufeln (11, 12, 22, 23, 28) gegen weitere Wurfschaufeln längerer und/oder kürzerer Bauart und/oder mit verschiedenen Winkeln zur Radialen angestellte Wurfschaufeln austauschbar sind, daß zumindest zwei verschiedene Paare Wurfschaufeln (11, 12, 22, 23, 28) unterschiedlicher Länge und/oder mit verschiedenen Winkeln zur Radialen angestellte Wurfschaufeln zum Austausch gegeneinander vorgesehen sind, daß für die größeren Streubreiten, zur Radialen der Schleuderscheibe winkelverstellbare Wurfschaufeln (11, 12) größerer, jedoch vorzugsweise unterchiedlicher, Länge verwendet werden und zwar derart, daß die Umfangsgeschwindigkeit an den Abstreukanten (18, 20) der Wurfschaufeln (11, 12) etwa 18 bis 37 m/sec, vorzugsweise ca. 23 m/sec für die kürzere Wurfschaufel (11) und ca. 30 m/sec für die längere Wurfschaufel (12) beträgt, daß für die kleineren Streubreiten, zur Radialen der Schleuderscheibe winkelverstellbare Wurfschaufeln (22, 23) kleinerer, jedoch vorzugsweise unterschiedlicher, Länge verwendet werden und zwar derart, daß die Umfangsgeschwindigkeit an den Abstreukanten (24, 25) der Wurfschaufeln (22, 23) etwa 13 bis 26 m/sec, vorzugsweise ca. 17 m/sec für die kürzere (22) und ca. 21 m/sec für die längere Wurfschaufel (23), beträgt, daß für das Grenzstreuen kurze, zur Radialen der Schleuderscheibe winkelverstellbare, vorzugsweise teleskopartige, Wurfschaufeln (28) verwendet werden und zwar derart, daß die Umfangsgeschwindigkeit an den Abstreukanten (39) der Wurfschaufel (28) zwischen etwa zumindest 8 m/sec, vorzugsweise ca. 10 m/sec für kleinere Grenzstreuabstände, und 26 m/sec, vorzugsweise 21 m/sec für größere Grenzstreuabstände, beträgt.

## Claims

1. Method of using centrifugal fertilizer broadcasters for the distribution of fertilizers and the like, such a broadcaster including a hopper, which is provided with metering members for at least two centrifugal discs disposed adjacent each other transversely relative to the direction of travel, each centrifugal disc being detachably disposed on its respective drive shaft and having shorter and longer throwing vanes and/or throwing vanes which are preferably orientated at different angles relative to the radial, said throwing vanes being disposed on the centrifugal disc in such an adjustable and pivotable manner that the horizontal angle of orientation is variable between the throwing vane and the tangent, which is established at the location of the dispersing edge along its circular path in the direction of rotation, and wherein different angles of orientation of the throwing vanes are provided in an upwardly extending plane, and that the centrifugal discs (10), together with the throwing vanes (11, 12), are interchangeable with additional centrifugal discs (21, 26, 27) having differently constructed and/or shorter and/or longer throwing vanes (22, 23, 28), characterised in that a plurality of sets of different pairs of centrifugal discs are provided for the uses of the centrifugal fertilizer broadcaster, each respective pair of centrifugal discs being used in such a manner that at least two different pairs of centrifugal discs and/or centrifugal discs having throwing vanes (11, 12, 22, 23, 28) of different lengths and/or short throwing vanes, and/or throwing vanes preferably orientated at different angles relative to the radial, are provided so as to be interchangeable with one another; for greater broadcasting widths, pairs of centrifugal discs (10) having long throwing vanes (11, 12), but of different lengths, are used, which are angularly adjustable relative to the radial of the centrifugal disc and/or are preferably orientated at different angles relative to the radial, the dispersing edges of said throwing vanes relative to the rotary axis (19) each having a spacing (A) of at least 35 to 50 cm, preferably 40 cm, for the longer throwing vane (12), and having a spacing (B) of at least 25 to 35 cm, preferably 30 cm, for the shorter throwing vanes (11); for smaller broadcasting widths, pairs of centrifugal discs (21) having shorter throwing vanes (22, 23), but of different lengths, are used, which are angularly adjustable relative to the radial of the centrifugal disc and/or are preferably orientated at different angles relative to the radial, the dispersing edges (24) of said throwing vanes relative to the rotary axis (19) each having a spacing (C) of at least 25 to 35 cm, preferably 28 cm, for the longer throwing vane (23), and having a spacing (D) of at least 18 to 28 cm, preferably 23 cm, for the shorter throwing vane (22); and for the limited broadcasting operation with end regions of broadcasting intensity which drop steeply at one end, at least one of the centrifugal discs (26, 27) is exchanged for a limited broadcasting disc, which has at least two longitudinally adjustable throwing vanes (28), which are angularly adjustable relative to the radial of the limited broadcasting disc, the throwing vanes (28) each being formed from component parts (29, 30), which are telescopically displaceable relative to one another, the dispersing edges (38) of said component parts having a smaller spacing (E, F) relative to the rotary axis (19) than the dispersing edge (18, 24) of the throwing vanes (11, 12, 22, 23) of the centrifugal discs (10, 21) for normal broadcasting widths of, for example, 15 to 24 m or, for example, of 9 to 15 m, such spacing preferably being a spacing between the dispersing edge (39) and the rotary axis (19) of 10 to 32 cm.

2. Method according to claim 1, characterised in that the difference between the spacings (A, B, C, D) from the dispersing edge (18, 39) to the rotary axis (19) of the throwing vanes (11, 12, 22, 23) of the two centrifugal discs (10, 21) for the greater broadcasting widths and the smaller broadcasting width is at least about 3 to 10 cm.

3. Method according to claim 1, characterised in that markings, such as grooves (16, 34) etc., are provided on each respective centrifugal disc (10, 21, 26, 27), the respective angular positions of the throwing vanes (11, 12, 22, 23) being adjustable with reference to said markings.

4. Method of using centrifugal fertilizer broadcasters for the distribution of fertilizers and the like, such a broadcaster including a hopper, which is provided with metering members for at least two centrifugal discs disposed adjacent each other at right angles to the direction of travel, each centrifugal disc being preferably detachably disposed on its respective drive shaft and having preferably shorter and longer throwing vanes, or respectively throwing vanes which are orientated at different angles relative to the radial, said throwing vanes being disposed on the centrifugal disc in such an adjustable and pivotable manner that the horizontal angle of orientation is variable between the throwing vane and the tangent, which is established at the location of the dispersing edge along its circular path in the direction of rotation, and wherein different angles of orientation of the throwing vanes are preferably provided in an upwardly extending plane, characterised in that a plurality of sets of different sets of throwing vanes are provided for the uses of the centrifugal fertilizer broadcaster, only one set of throwing vanes being used at a time, such that the throwing vanes (11, 12, 22, 23, 28) are disposed on the centrifugal discs so as to be interchangeable with differently constructed and/or shorter and/or longer throwing vanes and/or throwing vanes orientated at different angles relative to the radial; for greater broadcasting widths, throwing vanes (11, 12) of greater length, but preferably of different lengths or respectively orientated at different angles relative to the radial, are used, which are angularly adjustable relative to the radial of the centrifugal disc, whereas, for smaller broadcasting widths, throwing vanes (22, 23) of shorter length, but preferably of different lengths, are used, which are angularly adjustable relative to the radial of the centrifugal disc; for the limited broadcasting operation, short throwing vanes (28) are used, which are angularly adjustable relative to the radial of the centrifugal disc; and the dispersing edges (18) of the throwing vanes for the greater broadcasting widths are 5 cm further remote from the rotary axis (19) than the dispersing edges (24) of the throwing vanes (22, 23) for the smaller broadcasting widths, while the dispersing edges (24) of the throwing vanes (22, 23) for the smaller broadcasting widths are 5 cm further remote from the rotary axis (19) than the dispersing edges (39) of the throwing vanes (28) for the limited broadcasting operation.

5. Method of using centrifugal fertilizer broadcasters for the distribution of fertilizers and the like, such a broadcaster including a hopper, which is provided with metering members for at least two centrifugal discs disposed adjacent each other transversely relative to the direction of travel, each centrifugal disc being preferably detachably disposed on its respective drive shaft and having preferably shorter and longer throwing vanes, or respectively throwing vanes which are orientated at different angles relative to the radial, said throwing vanes being disposed on the centrifugal disc in such an adjustable and pivotable manner that the horizontal angle of orientation is variable between the throwing vane and the tangent, which is established at the location of the dispersing edge along its circular path in the direction of rotation, and wherein different angles of orientation of the throwing vanes are preferably provided in an upwardly extending plane, characterised in that a plurality of sets of different types of throwing vanes are provided for the uses of the centrifugal fertilizer broadcaster, one set of throwing vanes being used at a time, such that the throwing vanes (11, 12, 22, 23, 28) are interchangeable with additional throwing vanes of a longer and/or shorter construction and/or throwing vanes orientated at different angles relative to the radial; at least two different pairs of throwing vanes (11, 12, 22, 23, 28) of different lengths and/or throwing vanes orientated at different angles relative to the radial are provided so as to be interchangeable with one another; for the greater broadcasting widths, throwing vanes (11, 12) of greater length, but preferably of different lengths, are used, which are angularly adjustable relative to the radial of the centrifugal disc, such that the circumferential speed at the dispersing edges (18, 20) of the throwing vanes (11, 12) is about 18 to 37 m/sec, preferably approx. 23 m/sec, for the shorter throwing vane (11) and approx. 30 m/sec for the longer throwing vane (12); for the smaller broadcasting widths, throwing vanes (22, 23) of shorter, but preferably of different lengths, are used, which are angularly adjustable relative to the radial of the centrifugal disc, such that the circumferential speed at the dispersing edges (24, 25) of the throwing vanes (22, 23) is about 13 to 26 m/sec, preferably approx. 17 m/sec, for the shorter throwing vane (22) and approx. 21 m/sec for the longer throwing vane (23); and for the limited broadcasting operation, short throwing vanes (28) are used, which are angularly adjustable relative to the radial of the centrifugal disc and are preferably telescopic, such that the circumferential speed at the dispersing edges (39) of the throwing vane (28) is between about at least 8 m/sec, preferably approx. 10 m/sec, for smaller limited broadcasting spacings and 26 m/sec, preferably 21 m/sec, for greater limited broadcasting spacings.

## Revendications

1. Procédé de mise en oeuvre d'épandeur centrifuge pour distribuer des engrais ou moyens analogues comprenant un réservoir d'alimentation, des éléments de dosage pour au moins deux disques d'épandage disposés transversalement à la direction de déplacement, chaque disque d'épandage étant monté de manière amovible sur son arbre d'entraînement et chaque disque comporte chaque fois une palette d'éjection courte et une palette d'éjection longue et/ou de préférence des palettes d'éjection inclinées avec des angles différents par rapport aux rayons, ces palettes étant montées réglables et pivotantes sur les disques d'épandage pour que l'angle de réglage horizontal compris entre la palette d'éjection et la tangente au point du bord d'éjection à la trajectoire périphérique, dans le sens de rotation, soit variable, des angles de réglages différents étant prévus pour les palettes dans un plan vertical, les disques d'épandage (10) équipés des palettes d'éjection (11, 12) pouvant être échangés contre d'autres disques d'épandage (21, 26, 27) avec d'autres palettes d'éjection (22, 23, 28) réalisées différemment et/ou plus courtes et/ou plus longues, procédé caractérisé en ce que pour mettre en oeuvre l'épandeur centrifuge d'engrais, on prévoit plusieurs jeux de paires de disques d'épandage différents, une paire de disques d'épandage étant utilisée à chaque fois et cela en ce qu'au moins deux paires de disques d'épandage différents et/ou disques d'épandage ayant des palettes d'éjection (11, 12, 22, 23, 28) de grandes et/ou de petites longueurs différentes et/ou réglables suivant des angles différents par rapport aux rayons, sont prévues pour l'échange, en ce que pour de grandes largeurs d'épandage, on a des paires de disques d'épandage (10) avec des palettes d'éjection (11, 12) longues, avec toutefois des longueurs différentes, réglables angulairement par rapport aux rayons des disques d'épandage et/ou réglables avec des angles différents par rapport aux rayons, palettes dont les bords d'éjection ont une distance (A) par rapport à leur axe de rotation (19) qui est de préférence compris entre 35 et 50 cm et est égal notamment à 40 cm pour les palettes longues (12) et une distance (B) comprise entre au moins 25 et 35 cm, de préférence égale à 30 cm pour les palettes d'éjection courtes (11), en ce que pour de petites largeurs d'épandage, on utilise des paires de disques d'épandage (21) avec des palettes d'éjection (22, 23) courtes, mais néanmoins de longueurs différentes et qui sont réglable angulairement par rapport aux rayons du disque centrifuge et/ou de préférence avec des angles différents par rapport aux rayons, palettes dont les bords d'éjection (24) sont à une distance respective (C) par rapport à l'axe de rotation (19) comprise au moins entre 25 et 35 cm et égale de préférence à 28 cm pour les palettes longues (23) et à une distance (D) comprise entre au moins 18 et 28 cm et égale de préférence à 23 cm pour les palettes d'éjection courtes (22) et en ce que pour l'épandage en limite avec des zones d'extrémité de densité d'épandage fortement décroissante, on remplace au moins l'un des disques d'épandage (26, 27) contre un disque d'épandage en limite qui comporte au moins deux palettes d'éjection (28) réglables en longueur et en angle par rapport au rayon du disque d'épandage en limite, les palettes d'éjection (28) se composant chacune de parties (29, 30) coulissantes télescopiquement l'une par rapport à l'autre dont le bord d'éjection (38) présente une distance (E, F) par rapport à l'axe de rotation (19) plus faible que le bord d'éjection (18, 24) des palettes d'éjection (11, 12, 22, 23) des disques d'épandage (10, 23) correspondant à des largeurs d'épandage normal comprises par exemple entre 15 et 24 m ou par exemple de 9 à 15 m et cela de préférence à une distance entre le bord d'éjection (39) et l'axe de rotation (19) qui est de 10 à 32 cm.

2. Procédé selon la revendication 1, caractérisé en ce que la différence entre les distances (A, B, C, D) comprises entre les bordes d'éjection (18, 39) et l'axe de rotation (19) des palettes d'éjection (11, 12, 22, 23) des deux disques d'épandage (10, 21) pour les grandes largeurs de travail et celles pour les petites largeurs de travail est d'au moins de l'ordre de 3 à 10 cm.

3. Procédé selon la revendication 1, caractérisé en ce que les disques d'épandage respectifs (10, 21, 26, 27) comportent des repères tels que des encoches (16, 34 etc) permettant de régler la position angulaire respective des palettes d'éjection (11, 12, 22, 23).

4. Procédé de mise en oeuvre d'épandeur centrifuge pour distribuer des engrais ou analogues comprenant un réservoir d'alimentation, les éléments de dosage pour au moins deux disques d'épandage juxtaposés transversalement à la direction de déplacement de l'épandeur, chacun des deux disques d'épandage étant monté de préférence de manière amovible sur son arbre d'entraînement respectif et les disques comportant respectivement des palettes d'éjection de préférence une palette courte et une palette longue avec des angles différents par rapport aux rayons, palettes montées réglables et de manière pivotante sur les disques d'épandage de façon à pouvoir modifier l'angle horizontal compris entre chaque palette et la tangente appliquée au point d'intersection du bord d'éjection de la palette et de sa trajectoire dans le sens de rotation, des angles de réglage de préférence différents pour les palettes d'éjection étant prévus dans le plan vertical, procédé caractérisé en ce que pour la mise en oeuvre de l'épandeur centrifuge d'engrais, on dispose de plusieurs jeux de palettes d'éjection en utilisant chaque fois qu'un jeu de palettes et cela en échangeant les palettes d'éjection (11, 12, 22, 23, 28) contre d'autres palettes d'éjection, de formes différentes et/ou plus courtes et/ou plus longues et/ou ayant des angles différents par rapport aux rayons, sur les disques d'épandage et en ce que pour des grandes largeurs d'épandage, on utilise des palettes d'éjection (11, 12) de grandes largeurs mais ayant néanmoins des longueurs différentes ou des angles différents par rapport aux rayons, ces palettes étant réglables angulairement par rapport au rayon du disque d'épandage, et pour de petites largeurs d'épandage, on utilise des palettes d'éjection (22, 23) courtes mais de longueurs de préférence différentes, et qui sont réglables angulairement par rapport au rayon du disque d'épandage, et pour l'épandage en limite, on utilise de courtes palettes d'éjection (28) réglables angulairement par rapport aux rayons des disques d'épandage et en ce que les bords d'éjection (18) des palettes d'éjection pour les grandes largeurs d'épandage sont éloignés d'une distance par rapport à l'axe de rotation (19) supérieur de 5 cm à la distance des bords d'éjection (24) des palettes d'éjection (22, 23) pour les petites largeurs d'épandage alors que les bords d'éjection (24) des palettes d'éjection (22, 23) pour les petites largeurs d'épandage sont éloignés par rapport à l'axe de rotation (19) d'une distance supérieure de 5 cm à celle des bords d'éjection (39) des palettes d'éjection (28) pour l'épandage en limite.

5. Procédé de mise en oeuvre d'épandeur centrifuge pour distribuer des engrais ou analogues à l'aide d'un réservoir d'alimentation comportant des éléments de dosage pour au moins deux disques d'épandage juxtaposés dans la direction transversalement à la direction de déplacement de l'épandeur, chaque disque d'épandage étant de préférence monté de manière amovible sur son arbre d'entraînement respectif et ayant chaque fois une palette d'éjection courte et une palette d'éjection longue disposées suivant des angles différents par rapport aux rayons, ces palettes étant montées réglables et pivotantes sur les disques d'épandage pour que l'angle horizontal entre la palette d'éjection et la tangente appliquée au point de son arête d'éjection et de sa trajectoire circulaire, dans le sens de rotation soit réglable et que de préférence des angles de réglage différents soient prévus pour les palettes d'éjection dans le plan vertical, procédé caractérisé en ce que pour la mise en oeuvre de l'épandeur centrifuge, on a plusieurs jeux de palettes de natures différentes et on utilise chaque fois un jeu de palettes d'éjection à savoir on remplace les palettes d'éjection (11, 12, 22, 23, 28) par d'autres palettes d'éjection plus longues et/ou plus courtes et/ou avec des angles différents par rapport aux rayons, en ce qu on prévoit au moins deux paires différentes de palettes d'éjection (11, 12, 22, 23, 28) de longueurs différentes et/ou d'angles différents par rapport aux rayons, en ce que pour les grandes largeurs d'épandage, on utilise des palettes d'éjection (11, 12) réglables angulairement par rapport au rayon du disque d'épandage, qui sont plus grandes mais ont de préférence des longueurs différentes et cela pour avoir une vitesse périphérique aux bords d'éjection (18, 20) des palettes d'éjection (11, 12) de l'ordre de 18 à 37 m/sec de préférence de l'ordre de 23 m/sec pour les palettes d'éjection (11) courtes et environ 30 m/sec pour les palettes d'éjection longues (13), en ce que pour les petites largeurs d'épandage, on utilise des palettes d'éjection (22, 23) petites, réglables angulairement par rapport aux rayons des disques d'épandage, ces palettes ayant de préférence des longueurs différentes et cela de façon que la vitesse périphérique au niveau du bord d'éjection (24, 25) des palettes d'éjection (22, 23) soit de l'ordre de 13 à 26 m/sec et égale notamment à 17 m/sec pour la palette courte (22) et d'environ 21 m/sec pour la palette d'éjection longue (23), et en ce que pour l'épandage en limite, on utilise des palettes d'éjection (28) courtes, réglables angulairement par rapport aux rayons des disques d'épandage et réalisées de préférence de manière télescopique à savoir pour que la vitesse périphérique au niveau des bords d'éjection (39) des palettes (28) soit de l'ordre d'au moins 8 m/sec et de préférence égale à environ 10 m/sec pour des largeurs d'épandage en limite petites et de 26 m/sec de préférence 21 m/sec pour des largeurs d'épandage en limite grandes.

FIG. 1

FIG. 2

FIG. 3

FIG. 4

FIG. 5

EP 0 292 650 B1